# EUROPEAN PATENT SPECIFICATION

(11) **EP 2 574 890 B1**
(45) Date of publication and mention of the grant of the patent: **09.11.2016**
(21) Application number: 12172728.3
(22) Date of filing: 20.06.2012
(51) Int. Cl.: G01K 1/10, G01K 7/22

(54) **Temperature sensor and hydrogen-filled system**
Temperatursensor und wasserstoffgefülltes System
Capteur de température et système rempli d'hydrogène

(30) Priority: 28.09.2011 JP 2011212449
(43) Date of publication of application: 03.04.2013
(73) Proprietor: Shibaura Electronics Co., Ltd., Saitama 338-0836 (JP)
(72) Inventor: Koshimizu, Kazuto, Saitama, 338-0836 (JP); Nakaya, Takayuki, Saitama, 338-0836 (JP); Uchiyama, Satoshi, Saitama, 338-0836 (JP)
(74) Representative: Hoffmann Eitle

(56) References cited:
- JP-A- 2005 294 653
- US-A1- 2010 214 054

## Description

### BACKGROUND OF THE INVENTION

### Field of the Invention

The present invention relates to a temperature sensor capable of measuring a temperature in a container filled with hydrogen gas.

### Description of the Related Art

When a temperature of a hydrogen gas atmosphere is detected, a sensor element for temperature detection may be exposed to hydrogen to be reduced, thereby degrading accuracy of the detected temperature. For example, in a thermistor (a thermally sensitive resistor) for use as a sensor element, when the resistance value of the sensor element is increased due to reduction with hydrogen, the detected temperature is output as being lower than an actual temperature.

To address the problem of a deviation in the detected temperature due to reduction under a hydrogen gas atmosphere, Japanese Patent Laid-Open No. 2010-266206 proposes that a tank filled with hydrogen is provided with a plurality of temperature sensors and, based on an output from a temperature sensor with a high detected temperature, outputs of the other sensors are corrected. This proposal was made by paying attention to the fact that a sensor element (a temperature sensor) not reduced with hydrogen has a low resistance value and its detected temperature is high.

JP 2005-294653 relates to a high-temperature thermistor highly accurately and stably available over the temperature range from a room temperature to 700°C. In the high-temperature thermistor, a thermistor element is configured by forming electrodes on both upper and lower surfaces of a plate-like metal oxide sintered body 11 composed of Cr, Mn, Ca; and by connecting lead wires to the electrodes. The thermistor element and the connecting terminal side portions of the lead wires are fused and sealed by a sealing glass having a specific composition and linear expansion coefficient which is equal or smaller than a linear expansion coefficient of the metal oxide sintered body.

### SUMMARY OF THE INVENTION

The proposal of the patent gazette described above, however, is based on the premises that the temperature sensor is provided to each different tanks. If the sensor elements of all of the temperature sensors are reduced to the same degree, correction cannot be made. Therefore, a problem to be solved with priority is to suppress degradation in characteristics of the sensor element configuring the temperature sensor under a hydrogen gas atmosphere.

As shown also in the patent gazette described above, a hydrogen gas atmosphere can be embodied in, for example, a tank storing hydrogen as a negative electrode active material for a fuel cell. Under present circumstances, the pressure in this tank is set equal to or lower than 35 MPa due to legal regulations, but its upper limit may be further increased to, for example, 70 MPa, in future. Therefore, to address this trend, not only reduction with hydrogen but also exposure to high pressure is required to be taken into consideration. For example, an aim is to achieve a sensor element with durability at a pressure of 120 MPa and a temperature of -90°C to 150°C under an atmosphere with a hydrogen concentration of 10%.

The present invention was made based on these technical problems. The present invention relates to the use of a temperature sensor excellent in durability under a high-pressure hydrogen gas atmosphere. Also, another object of the present invention is to provide a hydrogen-filled system including this temperature sensor.

A temperature sensor used in the present invention includes a thermistor element body comprising an oxide sintered body, a pair of lead wires each electrically connected to the element body, and a glass sealing body sealing the element body and a part of the lead wires including a portion connected to the element body, wherein the pair of lead wires comprising any of Pt, an alloy comprising Pt and one or two of Ir and Pd, and an alloy of Pd and Ir, and the temperature sensor is used under a hydrogen atmosphere.

The present invention is based on new findings that, by using the lead wires made of a specific material, durability under the hydrogen atmosphere can be significantly improved.

In the present invention, a content of Ir and Pd in each alloy may be in a range equal to or lower than 20 mass %. The content of Ir and Pd in each alloy is preferably 5 mass % to 20 mass %, and more preferably 8 mass % to 12 mass %.

By using the temperature sensor of the present invention in a hydrogen-filled system including a container filled with hydrogen and a temperature sensor measuring a temperature in the container, the temperature of hydrogen in the container can be stably measured for a long period of time.

According to the present invention, a temperature sensor excellent in durability under a high-pressure atmosphere of hydrogen can be provided.

### BRIEF DESCRIPTION OF THE DRAWINGS

FIGS. 1A, 1B, and 1C are diagrams showing a schematic structure of a temperature sensor according to a first embodiment;
FIGS. 2A, 2B, and 2C are diagrams showing a schematic structure of a temperature sensor according to a second embodiment;
FIG. 3 is a diagram showing a schematic structure of a temperature sensor according to a third embodiment;
FIG. 4 is diagram showing a schematic structure of a hydrogen-filled system; and
FIG. 5 is a graph showing results of an experiment.

### DETAILED DESCRIPTION OF THE PREFERRED EMBODIMENTS

The present invention is described in detail below based on embodiments shown in the attached drawings.

### [First Embodiment]

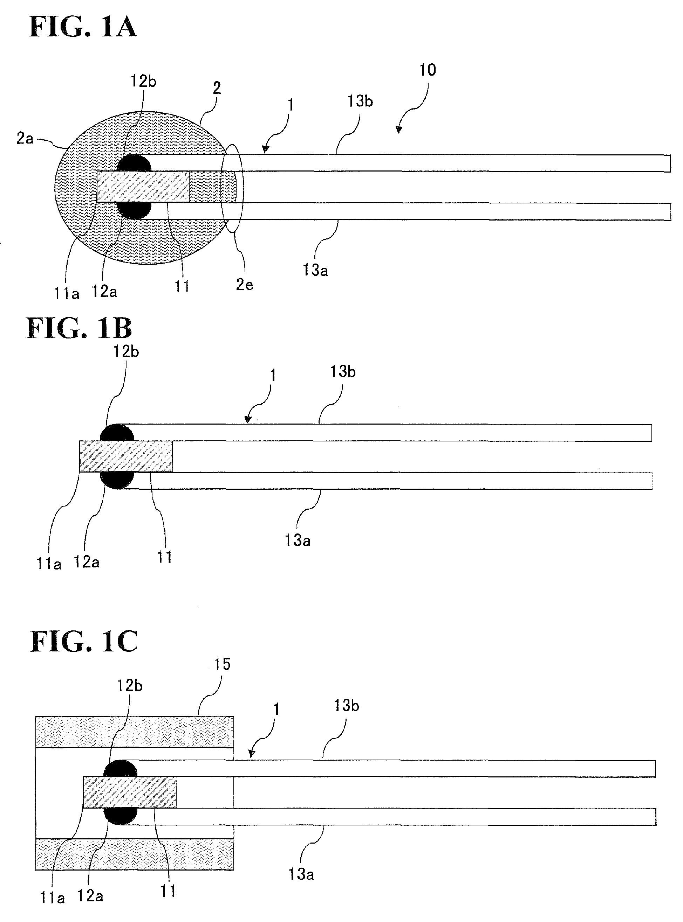

As shown in FIG. 1A, a temperature sensor 10 in a first embodiment is schematically configured of a thermistor element 1 and a sealing glass 2.

The thermistor element 1 is formed of a semiconductor element having a large temperature coefficient of its electrical resistance value, and is used together with a detection circuit (not shown) for extracting a change in resistance value as a change in voltage, thereby detecting a temperature of an environment where the thermistor element 1 is placed and generating a temperature detection signal comprising an electrical signal.

The sealing glass 2 seals and holds the thermistor element 1 in a hermetic state, thereby preventing the occurrence of a chemical or mechanical change based on the environmental condition and mechanically protecting the thermistor element 1.

The thermistor element 1 includes an element body 11, electrodes 12a and 12b, and lead wires 13a and 13b.

The element body 11 for use is formed by sintering a metal oxide to be in a plate shape.

A typical example of an oxide sintered body for use as the element body 11 is shown below. However, the present invention is not restricted to the following oxide sintered body. In a storage tank for hydrogen gas (hereinafter simply referred to as hydrogen) aimed by the present invention, the upper limit of temperature is 150°C at best, and therefore an oxide sintered body for high temperatures is not required to be used. Therefore, the present invention has many options of usable metal oxides. The oxide sintered body in the present invention has a coefficient of linear expansion of 65×10⁻⁷/°C to 110×10⁻⁷/°C (30°C to 700°C, the same applies to the following).

An oxide sintered body with a manganese oxide (Mn₃O₄) having a typical spinel structure as an NTC (negative temperature coefficient) thermistor as a basic composition can be used as the element body 11. An oxide sintered body having a composition of MₓMn₃₋ₓO₄ obtained by adding an M element (one or two or more of Ni, Co, Fe, Cu, Al, and Cr) to the above basic structure can be used as the element body 11. Furthermore, one or two or more of V, B, Ba, Bi, Ca, La, Sb, Sr, Ti, and Zr can be added.

Also, an oxide sintered body with a composite oxide, such as YCrO₃, as a basic structure having a typical perovskite structure as a PCT (positive temperature coefficient) thermistor can be used as the element body 11.

The electrodes 12a and 12b are formed on a front surface and a rear surface, respectively, of the element body 11 in a plate shape. The electrodes 12a and 12b are configured of a material selected from gold (Au), platinum (Pt), silver (Ag), and an alloy thereof.

The lead wires 13a and 13b have their one end connected to the electrodes 12a and 12b, respectively, thereby connecting the thermistor element 1 and an external circuit. The material of the lead wires 13a and 13b is selected from Pt, an alloy of Pt and iridium (Ir), an alloy of Pt and palladium (Pd), and an alloy of Pt, Ir, and Pd, with heat resistance. A content of Ir and Pd in each alloy is in a range equal to or lower than 20 mass % (hereinafter simply referred to as %). A content of Ir and Pd is preferably 5% to 20%, and more preferably 8% to 12%. The lead wires 13a and 13b have their ends connected to the electrodes 12a and 12b sealed with the sealing glass 2.

Also, any of amorphous glass and crystalline glass can be used as the sealing glass 2 shown in FIG. 1A. The amorphous glass having a glass softening point in a range of 300°C to 750°C, and the crystalline glass having a crystallization temperature in a range of 700°C to 1000°C can be used. The amorphous glass and the crystalline glass preferably have a coefficient of linear expansion of 65×10⁻⁷/°C to 110×10⁻⁷/°C in consideration of a coefficient of linear expansion of the oxide sintered body configuring the element body 11. As the glass having these characteristics, SiO₂-Pbo-based glass or SiO₂-SrO₂-based glass can be used. These are merely examples, and the glass is allowed to further include one or two or more of calcium oxide (CaO), manganese oxide (MnO), and aluminum oxide (Al₂O₃) and to still further include another oxide.

Meanwhile, with the material of the lead wires 13a and 13b being selected from Pt, a Pt-Ir alloy, a Pt-Pd alloy, and a Pt-Ir-Pd alloy and the sealing glass 2 sealing the thermistor element 1 to keep a hermetic state, the temperature sensor 10 has excellent durability under a high-pressure atmosphere of hydrogen. The reason for this assessed by the inventors is as described below.

The inventors observed a course of occurrence of a deviation in the detection results of the temperature sensor using the thermistor under a hydrogen atmosphere. That is, normally, since the element body formed of a thermistor is sealed with glass, no deviation occurs in the detection results as long as the sealed state is ensured. However, according to the studies by the inventors, a deviation may occur within an extremely short time, and it has been confirmed that the deviation is caused because the sealed state of the element body with the glass is released. In particular, it has been confirmed that with exfoliation occurring at a portion of sealing the lead wires, hydrogen infiltrates the inside of the sealing glass from the exfoliated portion to abruptly reduce the thermistor. This exfoliation is thought to be based on a bonding mechanism between the lead wires and the glass. When the lead wires are made of Dumet wires (copper-coated nickel steel wires), with an oxide with a covalent bonding of copper (Cu), oxygen (O) and silicon (Si) being generated at a bonding interface between the sealing glass and the lead wires, the sealing glass and the lead wires are closely attached together. However, under an atmosphere of hydrogen, oxygen is removed also from the oxide, and therefore the covalent bonding itself is destroyed, and the bond strength of the interface between the sealing glass and the lead wires is lost. Also with involvement of the fact that the temperature sensor is under a high pressure, this bond destruction proceeds to the inside of the sealing glass within a short period of time and, eventually, exposure to hydrogen reaches to the element body (thermistor), thereby causing a deviation in detection. To prevent this problem, in the present embodiment, the lead wires 13a and 13b are configured of a material selected from Pt, a Pt-Ir alloy, a Pt-Pd alloy, and a Pt-Ir-Pd alloy. Since these materials are chemically stable, no oxide is generated at the interface between the sealing glass and the lead wires, and therefore the bond strength itself is low compared with bonding via an oxide. However, because of chemical stability, even with exposure to hydrogen, the interface between the sealing glass 2 and the lead wires 13a and 13b can keep a state of being closely attached together. In addition, since the sealing glass 2 has a higher strength compared with resin, even the temperature sensor 10 is placed under high pressure, the state in which the sealing glass 2 seals the lead wires 13a and 13b can be kept.

A general outline of a method of manufacturing the temperature sensor 10 is described below.

First, as for the element body 11 forming the thermistor element 1, predetermined material powder is measured so as to have a predetermined composition, made into a slurry by adding water thereto, and then poured into a pot together with, for example, zirconia balls, for mixing with a ball mill.

Next, the slurry after mixing is dried by a spray dryer, and the obtained powder is calcined. Water is then added to the calcined powder to make the powder into a slurry again, and the slurry is poured into a pot together with zirconia balls for crushing by a ball mill. The crushed powder is dried and granulated by spray drying. Note that the calcination temperature is set as appropriate according to the composition.

Next, by cold isostatic pressure pressing, a cylinder-shaped ingot preform is fabricated from the powder obtained from the material preparation process, and this ingot preform is sintered. Then, the obtained sintered body is cut and further ground and polished so as to have a necessary thickness, thereby forming a thermistor wafer in a circular shape.

This thermistor wafer can be annealed in order to stabilize its thermistor characteristics. On upper and lower surfaces of the annealed thermistor wafer, thick or thin electrode films made of, for example, platinum, are formed. The thick-film electrodes are formed by mixing an organic binder or the like into platinum powder to fabricate a paste, coating both of the upper and lower surfaces of the thermistor wafer with the fabricated paste, drying the surfaces, and then sintering the thermistor wafer. On the other hand, the thin-film electrodes are formed by vacuum deposition or sputtering.

The thermistor wafer with the electrodes thus formed is cut by dicing to have desired dimensions, thereby making thermistor chips for use in a glass sealing element.

Then, a pair of straight lead wires each having a tip coated with a platinum paste in advance is connected to the upper and lower electrodes of a thermistor chip. After the platinum paste is dried, sintering is performed, thereby obtaining the thermistor element 1 shown in FIG. 1B.

Next, as shown in FIG. 1C, a glass tube 15 is placed so as to cover the thermistor element 1 and connection end side of the lead wires 13a and 13b. With this state being kept, the portion covered with the glass tube 15 is inserted and held in a furnace heated at a predetermined temperature for a predetermined period of time. During this holding, the glass tube 15 is sufficiently molten and is then coagulated, thereby forming the sealing glass 2 sealing the thermistor element 1 and the connection ends of the lead wires 13a and 13b to obtain the temperature sensor 10 of FIG. 1A.

### [Second Embodiment]

Next, a temperature sensor 20 according to a second embodiment is described.

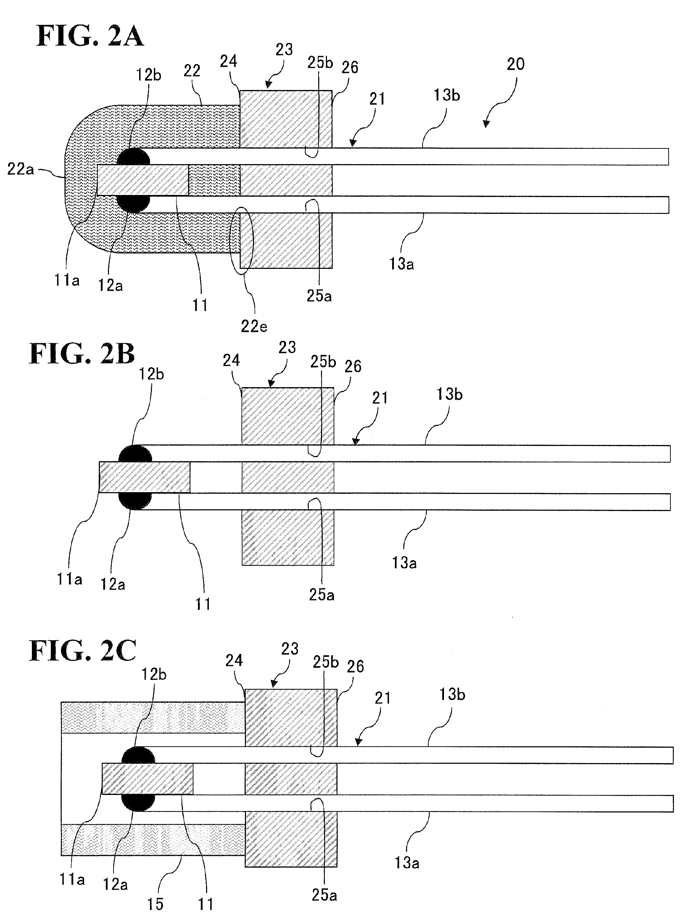

As shown in FIG. 2A, 2B, and 2C, the temperature sensor 20 is schematically configured of a thermistor element 21, a sealing glass 22, and a sealing complementary body 23. The temperature sensor 20 is different from the temperature sensor 10 in including the sealing complementary body 23 and having a different shape of the sealing glass 22, but the thermistor element 21 has a structure identical to that of the thermistor element 1 of the first embodiment, and therefore is not described herein.

The sealing complementary body 23 is a cylindrical member, including a holding surface 24 by which the sealing glass 22 is held, lead wire insertion holes 25a and 25b through which the lead wires 13a and 13b respectively penetrate in an axial direction, and a draw surface 26 from which the lead wires 13a and 13b are drawn.

The thermistor element 21 is placed on the holding surface 24 side of the sealing complementary body 23, and the lead wires 13a and 13b penetrate through the lead wire insertion holes 25a and 25b, respectively, to be drawn to the outside of the draw surface 26.

The sealing complementary body 23 is made of a material having a coefficient of linear expansion approximately equal to that of the lead wires 13a and 13b, and is integrally molten and bonded together with a bottom surface 23b of the sealing glass 22, with the lead wires 13a and 13b being inserted in the lead wire insertion holes 25a and 25b, respectively. Therefore, the sealing complementary body 23 mechanically reinforces the thermistor element 21 and the connection end side of the lead wires 13a and 13b with the thermistor element 21.

The sealing complementary body 23 can be configured of a material capable of achieving the above-described object, for example, Al₂O₃ and forsterite (2MgO·SiO₂) made of MgO·SiO₂. This ceramic has a coefficient of linear expansion on the order of 7.0×10⁻⁶/°C to 9.6×10⁻⁶/°C.

Also, as will be described further below, with the provision of the sealing complementary body 23, durability of the temperature sensor 20 under high-pressure exposure to hydrogen can be improved more, compared with the temperature sensor 10 of the first embodiment.

The sealing glass 22 is bonded to the holding surface 24 of the sealing complementary body 23. For this reason, the thickness of the glass around the lead wires 13a and 13b at a sealing end 22e of the sealing glass 22 can be made thicker, compared with the first embodiment. That is, the sealing glass 2 of the temperature sensor 10 of the first embodiment is in an oval shape as shown in FIG. 1A due to its fabrication process, and therefore the thickness of the sealing glass 2 around the lead wires 13a and 13b at a sealing end 2e from which the lead wires 13a and 13b are drawn, in particular, the thickness of the sealing glass 2 outside the oval body, is thin. By comparison, in the second embodiment, the thickness of the sealing glass 22 outside the lead wires 13a and 13b at the sealing end 22e can be made thick as equivalent to the other portion. Moreover, the sealing complementary body 23 following the sealing end 22e of the sealing glass 22 also has an outer diameter equivalent to or larger than that of the sealing glass 22. Therefore, in the temperature sensor 20 according to the second embodiment, a mechanical strength around the sealing end 22e is large, and therefore resistance under high-pressure exposure to hydrogen is higher than that of the first embodiment.

Next, in the temperature sensor 20, ideally, if the sealing glass 22 and the element body 11 are coaxially placed, a distance between a tip part 11a of the element body 11 and a top part 22a of the sealing glass 22, that is, the thickness of the glass, can be increased, and therefore resistance to high pressure is high. However, in the temperature sensor 10 of the first embodiment, a positional shift of the thermistor element 1 may occur in the process of melting and coagulating the glass tube 15 and, the sealing glass 2 and the element body 11 may not be able to be coaxially placed. In this case, the thickness of the glass between the tip part 11a of the element body 11 and the top part 22a of the sealing glass 2 is thin. By contrast, in the temperature sensor 20 of the second embodiment, by fixing the position of the sealing complementary body 23 in which the lead wires 13a and 13b penetrate through the lead wire insertion holes 25a and 25b, the position of the element body 11 can be kept. To this end, the sealing glass 22 and the element body 11 are coaxially placed, thereby allowing the thickness of the glass between the tip part 11a of the element body 11 and the top part 22a of the sealing glass 22 to be easily ensured to be a maximum thickness.

A method of manufacturing the temperature sensor 20 of the second embodiment is described below. Note that the method is the same as that of the first embodiment until the thermistor element 21 having the same structure as that of the thermistor element 1 shown in FIG. 1B is fabricated, and therefore the processes subsequent thereto are described below.

Predetermined positions of the lead wires 13a and 13b of the thermistor element 21 are coated with a paste formed by mixing glass powder having the same composition as that of the sealing glass 22 with an organic binder. This is to fix the lead wires 13a and 13b to the sealing complementary body 23 in the subsequent process as penetrating through the lead wire insertion holes 25a and 25b.

Next, the lead wires 13a and 13b are caused to penetrate through the lead wire insertion holes 25a and 25b, respectively, of the sealing complementary body 23 to be placed at predetermined positions of the glass paste applied in advance, and then the glass paste is dried for fixing (FIG. 2B).

Then, as shown in FIG. 2C, the glass tube 15 is prepared, one cut surface of the glass tube 15 is thinly coated with the same glass paste as that used for coating the lead wires 13a and 13b, and then the glass tube 15 is caused to abut on the holding surface 24 of the sealing complementary body 23 so that the paste-coated surface is in contact therewith.

Next, with the lead wires 13a and 13b being held so as to be vertical, portions of the glass tube 15 and the sealing complementary body 23 are heated in a heating furnace to melt the glass tube 15, thereby achieving glass sealing of the thermistor element 1 and the lead wires 13a and 13b to form the sealing glass 22. Also, by welding one end of the sealing glass 22 to the holding surface 24 of the sealing complementary body 23, the temperature sensor 20 shown in FIG. 2A is fabricated.

### [Third Embodiment]

Next, a temperature sensor 30 according to a third embodiment is described.

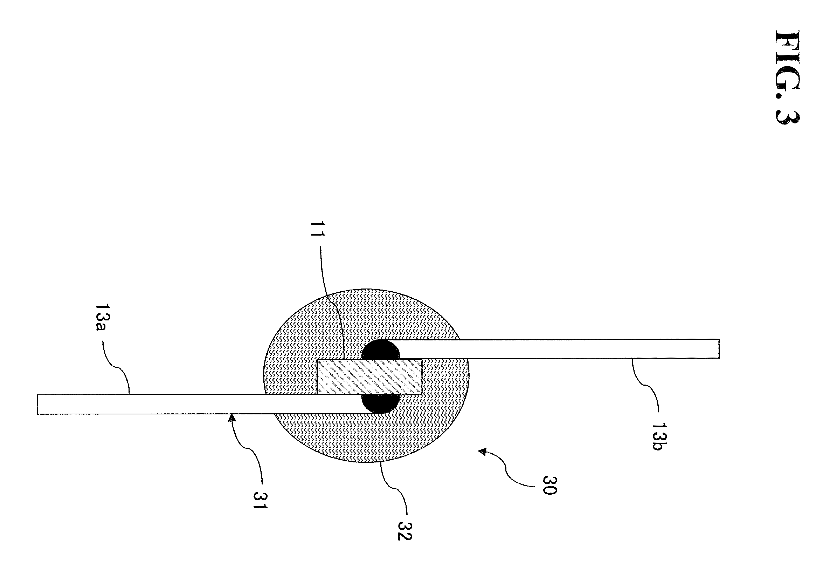

As shown in FIG. 3, the temperature sensor 30 is schematically configured of a thermistor element 31 and a sealing glass 32. The element body 11, the lead wires 13a and 13b, and the sealing glass 32 are similar in configuration to the element body 11, the lead wires 13a and 13b, and the sealing glass 2 of the first embodiment. However, while the lead wires 13a and 13b are drawn from the element body 11 in the same direction in the first embodiment, the lead wires 13a and 13b are drawn from the element body 11 in different directions in the third embodiment, as shown in FIG. 3.

In the temperature sensor 30, with the lead wires 13a and 13b drawn one by one from the element body 11 in different directions, a symmetrical shape is formed with reference to the element body 11, thereby achieving an improvement in dynamical balance. According to such configuration, it has been confirmed by the inventors that a Pd alloy (for example, a Pd-18% Ir alloy) having a relatively large coefficient of linear expansion of 120×10⁻⁷/°C can be used for the lead wires 13a and 13b. The lead wires 13a and 13b of a Pd alloy is at a price on the order of one third of a Pt alloy, which is a large advantage in cost.

Also, with the symmetrical shape with reference to the element body 11, the element body 11 becomes less prone to be deviated in position when the sealing glass 32 is provided, and a portion of the glass with a thin thickness is less prone to occur.

### [Fourth Embodiment]

A hydrogen-filled system 100 using the temperature sensor 10 (or 20 or 30) described above is described as a fourth embodiment.

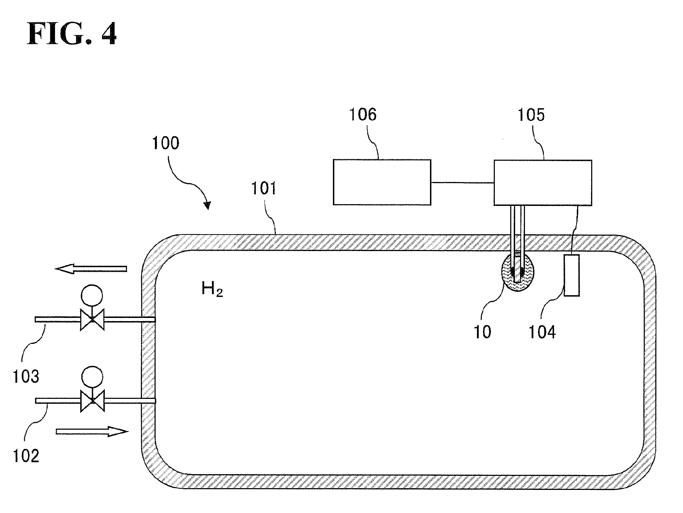

As shown in FIG. 4, the hydrogen-filled system 100 includes a tank 101 with a pressure-resistant structure for filling with hydrogen, a supply tube 102 including a gas flow passage for filling the tank 101 with hydrogen, a discharge tube 103 for discharging the hydrogen filled in the tank 101 to outside, the temperature sensor 10 (or 20 or 30) detecting a temperature in the tank 101, a pressure sensor 104 detecting a pressure in the tank 101, a remaining amount calculating part 105 finding an amount of hydrogen remaining in the tank 101 based on the measured temperature output from the temperature sensor 10 and the measured pressure output from the pressure sensor 104, and a display part 106 displaying the calculated remaining amount of hydrogen.

The remaining amount calculating part 105 applies the detected temperature and pressure in the tank 101 to the Boyle-Charles law to find the amount (volume) of hydrogen remaining in the tank 101, next finds a ratio of the remaining amount with respect to a filling limit of the tank 101 (a so-called fill-up), and then causes the found ratio to be displayed on the display part 106.

The hydrogen-filled system 100 described above is mounted on, for example, an electric vehicle, with a fuel cell as a power source. In this case, the tank 101 is filled with hydrogen via the supply tube 102 at a gas station. During travelling, the remaining amount calculating part 105 finds the amount of hydrogen remaining in the tank 101, and causes the remaining amount to be displayed on the display part 106. The display part 106 is placed inside the vehicle, and a driver drives the vehicle while keeping track of the remaining amount of hydrogen displayed on the display part 106. Here, only one tank 101 is shown, but a plurality of tanks 101 may be mounted. In that case, the hydrogen-filled system 100 is provided according to the number of tanks 101.

According to the hydrogen-filled system 100 described above, the temperature sensor 10 is excellent in durability even under high-pressure exposure to hydrogen, the remaining amount of hydrogen in the tank 101 can be accurately found for a long period of time.

### [Example]

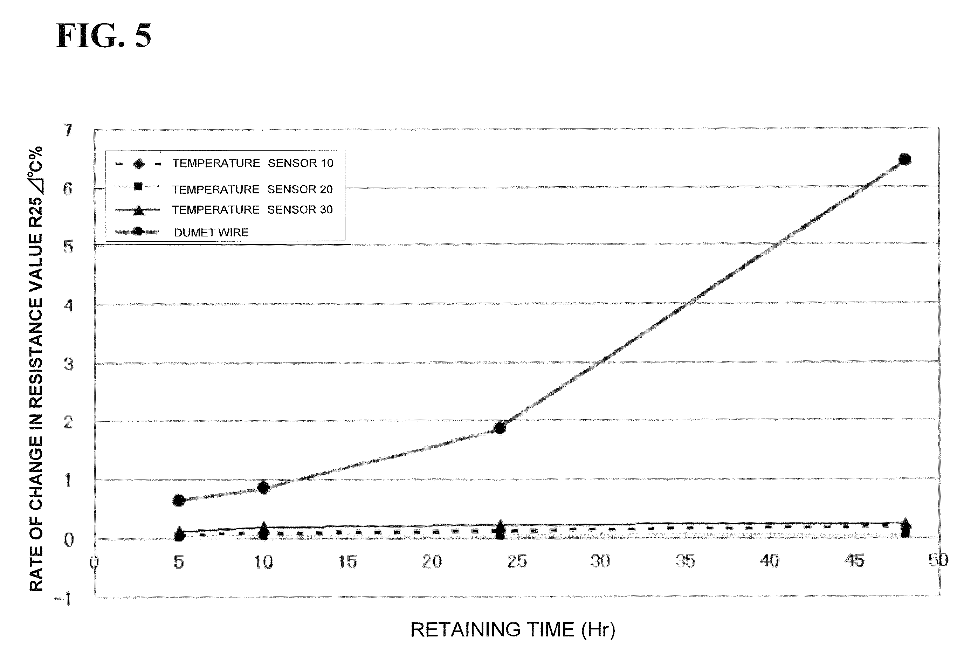

The temperature sensors 10, 20, and 30 of the embodiments described above were fabricated, and were exposed under an atmosphere with a hydrogen pressure of 120 MPa at 10°C. Then, while a current of 100 µA was being passed through the temperature sensors, their electrical resistances were measured. As a comparison, a temperature sensor similar to the temperature sensor 10 shown in the first embodiment except that Dumet wires were used as lead wires was used to perform similar measurements. The results are shown in FIG. 5. FIG. 5 shows rates of change in electrical resistance with reference to an electrical resistance at 25°C.

Specifications of the element body 11, the lead wires 13a and 13b, and the sealing glass 2 are as follows. Element body: 80% Y-8% Cr-8% Mn-4% Ca (mol %)
Lead wires: Pt-10% Ir alloy wire (the temperature sensor 10)
Pt-10% Ir alloy wire (the temperature sensor 20)
Pd-18% Ir alloy wire (the temperature sensor 30)
Dumet wire (for comparison) Sealing glass: SiO₂-31% PbO-59% K₂O-2% ()

As shown in Fig. 5, the temperature sensors 10, 20, and 30 according to the present invention were excellent, with fluctuations in resistance value hardly occurring even with a lapse of fifty hours or so.

## Claims

1. Use of a temperature sensor as a temperature sensor under an atmosphere of hydrogen, the temperature sensor comprising:
a thermistor element body (11) comprising an oxide sintered body; a pair of lead wires (13a, 13b) each electrically connected to the element body; and
a glass sealing body (2) sealing the element body (11) and a part of the lead wires (13a, 13b) including a portion connected to the element body, wherein
the pair of lead wires (13a, 13b) comprises any of Pt, an alloy of Pt and Pd, an alloy of Pt and Ir, an alloy of Pt, Pd and Ir and an alloy of Pd and Ir.

2. The use according to claim 1, wherein the pair of lead wires (13a, 13b) comprises an alloy of Pt and Pd, wherein the content of Pd is in a range equal to or lower than 20 mass %.

3. The use according to claim 2, wherein the pair of lead wires (13a, 13b) comprises an alloy of Pt and Pd, wherein the content of Pd in the alloy is 5 mass % to 20 mass %.

4. The use according to claim 3, wherein the pair of lead wires (13a, 13b) comprises an alloy of Pt and Pd, wherein the content of Pd in the alloy is 8 mass % to 12 mass %.

5. The use according to claim 1, wherein the pair of lead wires (13a, 13b) comprises an alloy of Pt and Ir, wherein the content of Ir in the alloy is in a range equal to or lower than 20 mass %.

6. The use according to claim 5, wherein the pair of lead wires (13a, 13b) comprises an alloy of Pt and Ir, wherein the content of Ir in the alloy is 5 mass % to 20 mass %.

7. The use according to claim 6, wherein the pair of lead wires (13a, 13b) comprises an alloy of Pt and Ir, wherein the content of Ir in the alloy is 8 mass % to 12 mass %.

8. The use according to claim 1, wherein the pair of lead wires (13a, 13b) comprises an alloy of Pt, Pd and Ir, wherein the content of Ir and Pd in the alloy is in a range equal to or lower than 20 mass %.

9. The use according to claim 8, wherein the pair of lead wires (13a, 13b) comprises an alloy of Pt, Pd and Ir, wherein the content of Ir and Pd in the alloy is 5 mass % to 20 mass %.

10. The use according to claim 9, wherein the pair of lead wires (13a, 13b) comprises an alloy of Pt, Pd and Ir, wherein a content of Ir and Pd in the alloy is 8 mass % to 12 mass %.

11. A hydrogen-filled system (100) comprising:
a container (101) filled with hydrogen; and
a temperature sensor (10) measuring a temperature in the container, **characterized in that** the temperature sensor (10) is the temperature sensor as defined in any of the claims 1-10.

## Patentansprüche

1. Verwendung eines Temperatursensors als Temperatursensor unter Wasserstoffatmosphäre, wobei der Sensor umfasst:
einen Thermistorelement-Körper (11), der einen gesinterten Oxid-Körper umfasst;
ein Paar von Leitungsdrähten (13a, 13b), die jeweils mit dem Elementkörper verbunden sind; und
einen Glas-Versiegelungskörper (2), der den Elementkörper (11) und einen Teil der Leitungsdrähte (13a, 13b) einschließlich des Abschnitts, der mit dem Elementkörper verbunden ist, versiegelt, worin
das Paar der Leitungsdrähte (13a, 13b) eines aus Pt, einer Legierung aus Pt und Pd, einer Legierung und Pt und Ir, einer Legierung aus Pt, Pd und Ir und einer Legierung aus Pd und Ir umfasst.

2. Verwendung gemäß Anspruch 1, worin das Paar der Leitungsdrähte (13a, 13b) eine Legierung aus Pt und Pd umfasst, worin der Gehalt an Pd im Bereich von gleich oder kleiner als 20 Massen-% liegt.

3. Verwendung gemäß Anspruch 2, worin das Paar der Leitungsdrähte (13a, 13b) eine Legierung aus Pt und Pd umfasst, worin der Gehalt an Pd in der Legierung 5 bis 20 Massen-% beträgt.

4. Verwendung gemäß Anspruch 3, worin das Paar der Leitungsdrähte (13a, 13b) eine Legierung aus Pt und Pd umfasst, worin der Gehalt an Pd in der Legierung 8 bis 12 Massen-% beträgt.

5. Verwendung gemäß Anspruch 1, worin das Paar der Leitungsdrähte (13a, 13b) eine Legierung aus Pt und Ir umfasst, worin der Gehalt an Ir im Bereich von gleich oder kleiner als 20 Massen-% liegt.

6. Verwendung gemäß Anspruch 5, worin das Paar der Leitungsdrähte (13a, 13b) eine Legierung aus Pt und Ir umfasst, worin der Gehalt an Ir in der Legierung 5 bis 20 Massen-% beträgt.

7. Verwendung gemäß Anspruch 6, worin das Paar der Leitungsdrähte (13a, 13b) eine Legierung aus Pt und Ir umfasst, worin der Gehalt an Ir in der Legierung 8 bis 12 Massen-% beträgt.

8. Verwendung gemäß Anspruch 1, worin das Paar der Leitungsdrähte (13a, 13b) eine Legierung aus Pt, Pd und Ir umfasst, worin der Gehalt an Ir und Pd in der Legierung in einem Bereich von gleich oder weniger als 20 Massen-% liegt.

9. Verwendung gemäß Anspruch 8, worin das Paar der Leitungsdrähte (13a, 13b) eine Legierung aus Pt, Pd und Ir umfasst, worin der Gehalt an Ir und Pd in der Legierung 5 bis 20 Massen-% beträgt.

10. Verwendung gemäß Anspruch 9, worin das Paar der Leitungsdrähte (13a, 13b) eine Legierung aus Pt, Pd und Ir umfasst, worin der Gehalt an Ir und Pd in der Legierung 8 bis 12 Massen-% beträgt.

11. Wasserstoff-gefülltes System (100), umfassend:
einen Behälter (101), der mit Wasserstoff gefüllt ist; und
einen Temperatursensor (10), der die Temperatur im Behälter misst, **dadurch gekennzeichnet, dass** der Temperatursensor (10) der in einem der Ansprüche 1 bis 10 definierte Temperatursensor ist.

## Revendications

1. Utilisation d'un capteur de température comme capteur de température sous atmosphère d'hydrogène, le capteur de température comprenant :
un corps d'élément de thermistance (11) comprenant un corps fritté à base d'oxyde ;
une paire de fils conducteurs (13a, 13b) connectés chacun électriquement au corps d'élément ; et
un corps étanche en verre (2) scellant le corps d'élément (11) et une partie des fils conducteurs (13a, 13b) comportant une partie reliée au corps d'élément,
dans laquelle :
la paire de fils conducteurs (13a, 13b) comprend n'importe lequel parmi Pt, un alliage de Pt et Pd, un alliage de Pt et Ir, un alliage de Pt, Pd et Ir et un alliage de Pd et Ir.

2. Utilisation selon la revendication 1, dans laquelle la paire de fils conducteurs (13a, 13b) comprend un alliage de Pt et Pd, dans laquelle la teneur en Pd est dans une plage égale à ou inférieure à 20 % en masse.

3. Utilisation selon la revendication 2, dans laquelle la paire de fils conducteurs (13a, 13b) comprend un alliage de Pt et Pd, dans laquelle la teneur en Pd dans l'alliage est de 5 à 20 % en masse.

4. Utilisation selon la revendication 3, dans laquelle la paire de fils conducteurs (13a, 13b) comprend un alliage de Pt et Pd, dans laquelle la teneur en Pd dans l'alliage est de 8 à 12 % en masse.

5. Utilisation selon la revendication 1, dans laquelle la paire de fils conducteurs (13a, 13b) comprend un alliage de Pt et Ir, dans laquelle la teneur en Ir dans l'alliage est dans une plage égale ou inférieure à 20 % en masse.

6. Utilisation selon la revendication 5, dans laquelle la paire de fils conducteurs (13a, 13b) comprend un alliage de Pt et Ir, dans laquelle la teneur en Ir dans l'alliage est de 5 à 20 % en masse.

7. Utilisation selon la revendication 6, dans laquelle la paire de fils conducteurs (13a, 13b) comprend un alliage de Pt et Ir, dans laquelle la teneur en Ir dans l'alliage est de 8 à 12 % en masse.

8. Utilisation selon la revendication 1, dans laquelle la paire de fils conducteurs (13a, 13b) comprend un alliage de Pt, Pd et Ir, dans laquelle la teneur en Ir et Pd dans l'alliage est dans une plage égale ou inférieure à 20 % en masse.

9. Utilisation selon la revendication 8, dans laquelle la paire de fils conducteurs (13a, 13b) comprend un alliage de Pt, Pd et Ir, dans laquelle la teneur en Ir et Pd dans l'alliage est de 5 à 20 % en masse.

10. Utilisation selon la revendication 9, dans laquelle la paire de fils conducteurs (13a, 13b) comprend un alliage de Pt, Pd et Ir, dans laquelle une teneur en Ir et Pd dans l'alliage est de 8 à 12 % en masse.

11. Système rempli d'hydrogène (100) comprenant :
un contenant (101) rempli d'hydrogène ; et
un capteur de température (10) mesurant une température dans le contenant, **caractérisé en ce que** le capteur de température (10) est le capteur de température selon l'une quelconque des revendications 1 à 10.
